# EUROPÄISCHE PATENTANMELDUNG

(11) **EP 4 851 738 A1**
(43) Veröffentlichungstag der Anmeldung: **09.12.2026**
(21) Anmeldenummer: 25181154.3
(22) Anmeldetag: 05.06.2025
(51) Int. Cl.: G05B 19/409, G05B 23/02, G06F 16/9032, G06N 5/022

(54) **BETRIEBSANALYSE DURCH SPRACHMODELL**

(71) Anmelder: Primetals Technologies Germany GmbH, 91058 Erlangen (DE)
(72) Erfinder: Horn, Christian, 91074 Herzogenaurach (DE); Thekale, Alexander, 91058 Erlangen (DE)
(74) Vertreter: Metals@Linz

(57) **Zusammenfassung**

Die vorliegende Erfindung betrifft ein System (10) und ein Verfahren (100) zur Betriebsanalyse einer metallverarbeitenden Anlage (1), eine Anlage (1) mit einem solchen System (10), die Verwendung eines solchen Systems (10) sowie ein Verfahren (200) zum Konfigurieren eines maschinell erlernten generativen Sprachmodells (16). Das System (10) umfasst: i) eine Wissensdatenbank (12), in der eine Anlageninformation (A), welche eine metallverarbeitende Anlage (1) betrifft, gespeichert ist; ii) eine Datenverarbeitungsvorrichtung (14) mit einem maschinell erlernten generativen Sprachmodell (16), welche auf die in der Wissensdatenbank (12) gespeicherte Anlageninformation (A) und über jeweils eine Datenschnittstelle (4a, 4b, 4c) auf Betriebsdaten (Ba, Bb, Bc) von wenigstens zwei Anlagenkomponenten (2a, 2b, 2c) zugreifen kann; iii) wenigstens eine Eingabeschnittstelle (18) zum Übermitteln einer Anfrage (22) an das Sprachmodell (16); und iv) wenigstens eine Ausgabeschnittstelle (20) zum Ausgeben einer Information (24). Das Sprachmodell (16) ist dazu eingerichtet, ausgehend von einer über die Eingabeschnittstelle (18) gestellten Anfrage (22) auf Grundlage der in der Wissensdatenbank (12) gespeicherten Informationen (A) und der Betriebsdaten (Ba, Bb, Bc) der wenigstens zwei Anlagenkomponenten (2a, 2b, 2c) eine Betriebsanalyse der metallverarbeitenden Anlage (1) vorzunehmen und eine auf dieser Betriebsanalyse beruhende Information (24) über die Ausgabeschnittstelle (20) auszugeben.

## Beschreibung

### Gebiet der Technik

Die vorliegende Erfindung betrifft ein System und ein Verfahren zur Betriebsanalyse einer metallverarbeitenden Anlage, eine Anlage mit einem solchen System, die Verwendung eines solchen Systems sowie ein Verfahren zum Konfigurieren eines maschinell erlernten generativen Sprachmodells.

### Stand der Technik

Ein grundlegendes technisches Problem in Industrieanlagen, insbesondere in der Metallindustrie, besteht in der Fragmentierung und mangelnden Integration von Daten aus verschiedenen automatisierten, im Folgenden auch als Anlagenkomponenten bezeichneten Systemen. Metallverarbeitende Anlagen werden üblicherweise durch eine Vielzahl von Systemen automatisiert bzw. weisen eine Vielzahl von Anlagenkomponenten auf, die Daten in unterschiedlichen Formaten und mit unterschiedlichem Informationsgehalt erzeugen. Diese Daten umfassen, neben unmittelbaren numerischen Daten wie zum Beispiel Messwerten, sowohl textbasierte und nichtstrukturierte Daten wie zum Beispiel Logs (Log-Dateien), Dokumentationen und Fehlermeldungen als auch strukturierte Daten wie zum Beispiel Datenbanken, visuelle Daten, akustische Daten, bereits aggregierte Daten und Feedback von Überwachungssystemen. Grundsätzlich kann jedes dieser Systeme oder jede dieser Anlagenkomponenten nur einen im Hinblick auf eine gesamtheitliche Anlagenbetrachtung, die auch Wechselwirkungen und Zusammenhänge unterschiedlicher Anlagenkomponenten oder Systeme berücksichtigt, Teil der relevanten Informationen liefern. Die jeweils bereitgestellten Daten erlauben also nur eine Teilbetrachtung der Gesamtanlage, zum Beispiel des Produktionsprozesses, des mechanischen Zustands, des Wartungszustands oder einzeln auftretender Fehler und Störungen. Die Daten können dabei oft nur über nicht-einheitliche Schnittstellen abgerufen werden, was die Integration und Nutzung der Daten erschwert. Unterschiedliche Schnittstellenbeschreibungen können zusätzlich zur Komplexität beitragen.

Daher wird eine Gesamtbeurteilung des Anlagenzustands bzw. eine Betriebsanalyse, welche die Gesamtanlage bzw. den darauf ablaufenden Gesamtprozess im Blick hat, in der Regel nur von menschlichen Fachpersonen vorgenommen. Auch Fragestellungen oder Probleme, deren Bearbeitung Daten aus mehreren Systemen bzw. Anlagenkomponenten erfordert, müssen von menschlichen Fachpersonen gelöst werden. Es erfordert oftmals viel "Detektivarbeit" und ein Zusammenpuzzeln von Information aus unterschiedlichen Quellen sowie viel Erfahrung, um eine konkrete Fragestellung - zum Beispiel warum eine (nicht substantielle) Fehlermeldung in einer Anlagenkomponente plötzlich gehäuft auftritt, die Produktqualität langsam sinkt und/oder dergleichen - beantworten zu können.

### Zusammenfassung der Erfindung

Vor diesem Hintergrund ist es eine Aufgabe der vorliegenden Erfindung, die Betriebsanalyse einer metallverarbeitenden Anlage zu verbessern, insbesondere zu vereinfachen und/oder zu automatisieren.

Diese Aufgabe wird gelöst durch ein System und ein Verfahren zur Betriebsanalyse einer metallverarbeitenden Anlage, eine Anlage mit einem solchen System, eine Verwendung eines solchen Systems sowie ein Verfahren zum Konfigurieren eines maschinellen erlernten generativen Sprachmodells gemäß den unabhängigen Ansprüchen.

Bevorzugte Ausführungsformen sind Gegenstand der abhängigen Ansprüche sowie der folgenden Beschreibung.

Gemäß einem ersten Aspekt der Erfindung weist das, insbesondere zumindest teilweise computerimplementierte, System zur Betriebsanalyse einer metallverarbeitenden Anlage auf: i) eine Wissensdatenbank, in der eine Anlageninformation, die eine metallverarbeitende Anlage betrifft, gespeichert ist; ii) eine Datenverarbeitungsvorrichtung mit einem maschinell erlernten generativen Sprachmodell, insbesondere einem Large Language Modell (LLM) oder einem Small Language Modell (SLM), welche auf die in der Wissensdatenbank gespeicherte Anlageninformation und über jeweils eine Datenschnittstelle auf, insbesondere aktuelle, Betriebsdaten von wenigstens zwei Anlagenkomponenten zugreifen kann oder Zugriff hat; iii) wenigstens eine Eingabeschnittstelle zum Übermitteln einer Anfrage an das Sprachmodell; und iv) wenigstens eine Ausgabeschnittstelle zum Ausgeben einer Information. Das Sprachmodell ist dazu eingerichtet, ausgehend von einer über die Eingabeschnittstelle gestellten Anfrage auf Grundlage der in der Wissensdatenbank gespeicherten Informationen und der Betriebsdaten der wenigstens zwei Anlagenkomponenten, insbesondere auf Grundlage eines in Reaktion auf die Anfrage erfolgenden Zugriffs auf die Anlageninformation in der Wissensdatenbank und die Betriebsdaten, eine Betriebsanalyse der metallverarbeitenden Anlage vorzunehmen und eine auf dieser Betriebsanalyse beruhende Information über die Ausgabeschnittstelle auszugeben.

Eine Betriebsanalyse im Sinne der vorliegenden Erfindung ist vorzugsweise eine Beurteilung oder Einordnung eines (Gesamt-)Betriebszustands der metallverarbeitenden Anlage. Eine Betriebsanalyse kann insbesondere das Tätigen eine Aussage über den Anlagenzustand, den mittels der Anlage durchgeführten Produktionsprozess und/oder das mithilfe der Anlage hergestellte Produkt umfassen.

Ein maschinell erlerntes generatives Sprachmodell im Sinne der Erfindung ist vorzugsweise ein von einem oder mehreren Algorithmen auf Grundlage von Trainingsdaten erzeugtes statistisches Sprachmodell. Das maschinell erlernte generative Sprachmodell kann insofern auch als trainiertes generatives Sprachmodell bezeichnet werden. Das maschinell erlernte generative Sprachmodell ist zweckmäßigerweise das Ergebnis von maschinellem Lernen, zum Beispiel deep learning. Ein derart maschinell erlerntes generatives Sprachmodell kann gemeinhin auch als künstliche Intelligenz bezeichnet werden, die automatisch eine Art von Eingabe in eine andere Art von Ausgabe umwandeln, insbesondere eine solche Ausgabe frei generieren, kann. Dem maschinell erlernten generativen Sprachmodell liegt vorzugsweise ein Transformer zugrunde, d. h. eine neuronale Netzwerkarchitektur. Bei dem maschinell erlernten generativen Sprachmodell kann es sich insbesondere um einen generativen vortrainierten Transformer (Generative Pretrained Transformer, GPT) oder ein ähnliches vortrainiertes Maschine-Learning-Modell handeln.

Das maschinell erlernte generative Sprachmodell muss infolgedessen nicht spezifisch auf die Betriebsanalyse einer metallverarbeitenden Anlage (vor-)trainiert sein. Das maschinell erlernte generative Sprachmodell kann vielmehr anhand einer Vielzahl von beliebigen Texten, Videos und/oder anderen Datenquellen trainiert sein. Bei dem maschinell erlernten generativen Sprachmodell kann es sich insbesondere um ein auf dem Markt (kommerziell) verfügbares Sprachmodell handeln, dessen genaue Architektur, Training, und interne Arbeitsweise für den Einsatz in der vorliegenden Erfindung nicht zwingend bekannt sein muss und maßgeblich ist.

Ein Aspekt der Erfindung beruht auf dem Ansatz, zur Betriebsanalyse einer metallverarbeitenden Anlage ein maschinell erlerntes generatives Sprachmodell vorzusehen. Das Sprachmodell ist dabei zweckmäßigerweise zur Beantwortung von Anfragen eingerichtet, welche eine Gesamtbetrachtung der metallverarbeitenden Anlage erfordern, d. h. eine Berücksichtigung von Information aus vielen verschiedenen Quellen nötig machen. Das Sprachmodell, zum Beispiel ein sogenanntes Large Language Modell (LLM) oder ein sogenanntes Small Language Modell (SLM), muss dabei nicht spezifisch auf die Beantwortung solcher im Umfeld der Metallverarbeitung auftretenden Anfragen trainiert sein. Um dennoch die Beantwortung solcher Anfragen zu ermöglichen, ist oder wird eine Wissensdatenbank mit einer Anlageninformation bereitgestellt. Eine Datenverarbeitungsvorrichtung, auf der das Sprachmodell beispielsweise betreibbar ist oder betrieben wird, kann zweckmäßigerweise auf diese Anlageninformation in der Wissensdatenbank zugreifen. Zugleich hat die Datenverarbeitungsvorrichtung zweckmäßigerweise auch Zugriff auf Betriebsdaten von wenigstens zwei Anlagenkomponenten oder (automatisierten) Systemen der Anlage, z. B. über jeweils eine entsprechende Datenschnittstelle. Zur Durchführung der Betriebsanalyse ist das Sprachmodell also vorzugsweise dazu eingerichtet, sich auf eine Anlageninformation und Information zu wenigstens zwei Anlagenkomponenten zu stützen. Das Sprachmodell kann dabei zweckmäßigerweise während der Laufzeit über entsprechende Datenschnittstellen auf die für die Durchführung der Betriebsanalyse notwendigen Betriebsdaten dieser Anlagenkomponenten und/oder die Anlageninformation zugreifen.

Die, insbesondere statische, Anlageninformation kann zum Beispiel allgemeine Anlagendaten wie eine Information zur Anlagenkonfiguration, eine Information zum Anlagenlayout und/oder dergleichen enthalten. Die Anlageninformation ist dabei zweckmäßigerweise spezifisch für die metallverarbeitende Anlage, insbesondere für deren Anlagenkomponenten, und kann beispielsweise vom Hersteller und/oder Betreiber erstellte Dokumentationen, Konstruktionspläne, Schaltpläne, Datenblätter - zum Beispiel zu einzelnen Komponenten wie verbauten Motoren, Aktuatoren, Sensoren und/oder anderen Bauteilen - und/oder dergleichen umfassen. Die Anlageninformation kann also eine Information enthalten, die unabhängig vom aktuellen Betriebszustand der metallverarbeitenden Anlage oder einzelner Anlagenkomponenten ist und in diesem Sinne als allgemeingültig (statisch) für die spezifische Anlage angesehen werden kann. Mit "statisch" ist hier allerdings nicht gemeint, dass sich die Anlageninformation über einen längeren Zeitraum nicht ändern kann. Beispielsweise können Modifikationen, die an der Anlage vorgenommen werden, oder neu gewonnenes Wissen dokumentiert und diese Dokumentation als Teil der Anlageninformation in der Datenbank bereitgestellt werden.

Die Betriebsdaten der wenigstens zwei Anlagenkomponenten oder Systeme charakterisieren dagegen zweckmäßigerweise den, vorzugsweise aktuellen, Betriebszustand der jeweiligen Anlagenkomponente, den mit dieser Anlagenkomponente (aktuell) durchgeführten Prozess und/oder den Zustand, insbesondere die Qualität, des (aktuell) mit ihr hergestellten Produkts. Die Betriebsdaten korrespondieren also vorzugsweise mit einer sich im Laufe des Betriebs ändernden (dynamischen) Information. Die Betriebsdaten können zum Beispiel numerische Daten, etwa (Sensor-)Messwerte und/oder Prozesswerte, oder Logs (Log-Dateien) wie (Betriebs-)Dokumentationen oder Fehlermeldungen, visuelle Daten, akustische Daten, bereits aggregierte Daten, Feedback von Überwachungssystemen und/oder dergleichen umfassen.

Auf Grundlage dieser in der Wissensdatenbank gespeicherten Anlageninformation und der Betriebsdaten der wenigstens zwei Anlagenkomponenten kann das Sprachmodell eine Betriebsanalyse der metallverarbeitenden Anlage vornehmen. Zweckmäßigerweise lässt sich diese Betriebsanalyse durch eine Anfrage auslösen, die über eine Eingabeschnittstelle erfolgen kann. Mittels der Anfrage kann zum Beispiel ein menschlicher Benutzer, aber gegebenenfalls auch eine Anlagenkomponente, eine Betriebsanalyse durch das Sprachmodell veranlassen. Die Betriebsanalyse wird vorzugsweise ausgehend von der Anfrage, d. h. mit Blick auf die Anfrage oder unter Berücksichtigung der Anfrage, vorgenommen. Die Betriebsanalyse enthält infolgedessen vorzugsweise eine (konkrete) Antwort oder Stellungnahme auf die Anfrage. Das Sprachmodell ist insofern zweckmäßigerweise dazu eingerichtet, eine entsprechende, auf der Betriebsanalyse beruhende Information über eine Ausgabeschnittstelle auszugeben.

Grundsätzlich ist mit einem solchen System zur Betriebsanalyse einer metallverarbeitenden Anlage also eine Analyse des Anlagenzustands, der Produktionsprozesse und/oder der damit hergestellten Produkte automatisch möglich, d. h. ohne dass menschliche Fachpersonen einen Beitrag leisten müssen. Der Einsatz eines maschinell erlernten generativen Sprachmodells erlaubt dabei auch spezifische Fragestellungen, die dann individuell bearbeitet werden können. Anders als konventionelle Überwachungssysteme kann das Sprachmodell also nicht nur vordefinierte Abfragen oder Berechnungen durchführen. Insbesondere können neue Anfragen oder Fragestellungen ohne zeitaufwendige Anpassungen des vorgeschlagenen Systems bearbeitet werden. Die Zeit, die für die entsprechende Anpassung, z. B. eine Umprogrammierung, konventioneller Systeme erforderlich ist, kann so eingespart werden. Menschliche Benutzer oder Anlagenkomponenten können profitieren, weil ihre individuellen Anfragen auch ohne die Verfügbarkeit einer menschlichen Fachperson bearbeitet werden können. Infolgedessen lässt sich auch das Bedienpersonal der Anlage reduzieren. Durch die ständige Einsatzbereitschaft des vorgeschlagenen Systems ist auch eine schnelle Reaktion auf auftretende Probleme oder Änderungen im Betrieb der Anlage möglich. Die kontinuierliche Überwachung kann auch dabei helfen, Anlagenprobleme schneller zu entdecken und zu beheben. Infolgedessen lässt sich so die Ausfallzeit der Anlage oder jedenfalls einzelner Anlagenteile verringern.

Über die Ausgabeschnittstelle kann die auf der Betriebsanalyse beruhende Information an einen menschlichen Benutzer oder gegebenenfalls auch an eine anfragende Anlagenkomponente oder ein anfragendes System ausgegeben werden. Die Information kann grundsätzlich aber auch an einen menschlichen Benutzer oder eine Anlagenkomponente ausgegeben werden, der oder die die Anfrage nicht gestellt hat.

Mittels der Anfrageschnittstelle können Aufgaben oder Fragestellungen vorgegeben werden. Die Anfrageschnittstelle kann, insbesondere bei einer Anfrage durch einen menschlichen Benutzer, zur Texteingabe oder -erkennung eingerichtet sein. Die Texteingabe kann klassisch über eine Tastatur, aber auch über ein Sprachsignal o. ä. erfolgen. Zur Anfrage durch eine Anlagenkomponente kann aber auch eine entsprechende Datenschnittstelle vorgesehen sein. Insbesondere kann so auch eine Anlagenkomponente, die Betriebsdaten zur Durchführung der Betriebsanalyse durch das Sprachmodell bereitstellt, auch Aufgaben oder Fragestellungen vorgeben, d. h. eine Anfrage stellen.

Die Schnittstellen, d. h. insbesondere die Anfrageschnittstelle, die Ausgabeschnittstelle und/oder die Datenschnittstellen, beruhen vorzugsweise auf Standard-Kommunikationsprotokollen bzw. sind auf Grundlage solcher Standard-Kommunikationsprotokolle benutz- oder betreibbar.

Das System zur Betriebsanalyse einer metallverarbeitenden Anlage kann softwaretechnisch und gegebenenfalls zusätzlich, zumindest teilweise, hardwaretechnisch ausgebildet sein. Das System kann insbesondere eine, vorzugsweise mit einem Speicher- und/oder Bussystem daten- bzw. signalverbundene, Verarbeitungseinheit aufweisen. Beispielsweise kann das System eine Mikroprozessoreinheit (CPU) oder ein Modul einer solchen und/oder ein oder mehrere Programme oder Programmmodule aufweisen. Insbesondere kann das maschinell erlernte generative Sprachmodell ein Programm- bzw. Softwaremodul des Systems bilden. Das System kann dazu ausgebildet sein, Befehle, die als ein in einem Speichersystem abgelegtes Programm oder maschinell erlerntes generatives Sprachmodell implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien, aufweisen. Das Programm bzw. das maschinell erlernte generative Sprachmodell kann derart beschaffen sein, dass es das hier beschriebenen Verfahren oder zumindest Teile davon verkörpert bzw. auszuführen imstande ist, sodass damit eine Betriebsanalyse vorgenommen werden kann.

Nachfolgend werden bevorzugte Ausführungsformen der Erfindung und deren Weiterbildungen beschrieben. Diese Ausführungsformen können jeweils, soweit dies nicht ausdrücklich ausgeschlossen wird, beliebig miteinander sowie mit den im Weiteren beschriebenen Aspekten der Erfindung kombiniert werden.

In einer bevorzugten Ausführungsform ist das Sprachmodell dazu eingerichtet, die Betriebsanalyse der metallverarbeitenden Anlage ausgehend von einer Kombination der in der Wissensdatenbank gespeicherten Anlageninformation mit den Betriebsdaten vorzunehmen. Das Sprachmodell kann also zum Beispiel den Betriebszustand der Anlage beurteilen oder einordnen, indem es die (statische) Anlageninformation mit den aktuellen Betriebsdaten kombiniert. Dadurch können verschiedene Typen von Wissen, nämlich Hintergrundwissen insbesondere zur Anlage, zu deren Konfiguration, deren Arbeitsweise und resultierenden Prozessabläufen und/oder dergleichen, und aktuelles Zustandswissen, zum Beispiel Messwerte, Logs und/oder dergleichen, zu einem Gesamtbild konsolidiert werden. Dieses anlagenübergreifende Vorgehen und die damit verbundene Übersicht über die Anlage erlauben eine zuverlässige und präzise Lösung von Problemstellungen auch auf tieferer Ebene, d. h. Problemstellungen, die spezifisch für zum Beispiel eine bestimmte Anlagenkomponente sind.

In einer weiteren bevorzugten Ausführungsform ermöglicht die Eingabeschnittstelle eine Semantik-basierte Anfrage und die Ausgabe Schnittstelle eine Semantik-basierte Ausgabe. Eine Semantik-basierte Anfrage oder Ausgabe im Sinne der vorliegenden Erfindung ist vorzugsweise eine Anfrage oder Ausgabe, die einen Sinngehalt hat. Eine Semantik-basierte Anfrage oder Ausgabe ist also nicht bloß ein logischer Befehl, zum Beispiel im Sinne einer Programmfunktion oder Programmierung, oder ein einzelner Wert bzw. ein Ergebnis. Die Anfragen können beispielsweise als (Fließ-)Text formuliert und die auf der Betriebsanalyse beruhende Information als (Fließ-)Text ausgegeben werden. Die Anfragen können getippt oder gesprochen werden. Das Sprachmodell ist zweckmäßigerweise dazu eingerichtet, den Sinn des so eingegebenen Texts zu erfassen, insbesondere zu "verstehen". Diese Semantik-basierte Herangehensweise und die entsprechende Einrichtung der Eingabe- und Ausgabeschnittstelle erleichtert die Benutzung des Systems erheblich.

In einer weiteren bevorzugten Ausführungsform ist das Sprachmodell durch die Verarbeitung einer Semantik-basierten Beschreibung der metallverarbeitenden Anlage zum Vornehmen einer Betriebsanalyse der metallverarbeitenden Anlage eingerichtet, insbesondere darauf vorbereitet. Dem Sprachmodell können zur entsprechenden Einrichtung beispielsweise anlagenspezifische Daten, insbesondere zumindest ein Teil der Anlageninformation, bereitgestellt, d. h. das Sprachmodell damit "gefüttert", werden. Diese anlagenspezifischen Daten enthalten hierbei vorzugsweise eine Information zur Daten- oder Informationsinfrastruktur innerhalb der metallverarbeitenden Anlage. Die anlagenspezifischen Daten können zum Beispiel eine Information enthalten, welche (Daten-)Schnittstellen vorhanden sind, welche (Betriebs-)Daten dort abgerufen werden können und/oder welche Bedeutung diese (Betriebs-)Daten haben. Die anlagenspezifischen Daten können zum Beispiel eine Information darüber enthalten, wie die Anlageninformation oder die Betriebsdaten erhältlich sind und wie diese Betriebsdaten zu interpretieren sind. Damit kann das Sprachmodell "vorgebildet" sein. Das Sprachmodell kann infolgedessen die Rolle einer Fachperson übernehmen.

In einer weiteren bevorzugten Ausführungsform ist das Sprachmodell dazu eingerichtet, in Reaktion auf eine Anfrage anhand von der in der Wissensdatenbank gespeicherten Anlageninformation und/oder den Betriebsdaten der Anlagenkomponenten eine Rückfrage über die Ausgabeschnittstelle auszugeben mit der Aufforderung, die Anfrage zu präzisieren und/oder eine Zwischenvalidierung vorzulegen. Zum Beispiel kann das Sprachmodell verlangen, eine spezifische Gerüstnummer für eine Auswertung in der Fertigstraße eines Warmwalzwerks für Metall anzugeben. In einem anderen Beispiel kann das Sprachmodell nach der Temperatur eines gewalzten Bands an einer (vom Sprachmodell) vorgegebenen Position, etwa vor der Walzstraße, nach der Walzstraße, nach dem Durchlaufen einer anschließenden Kühlstrecke etc., fragen. Dadurch kann die Betriebsanalyse mit einer höheren Zuverlässigkeit und Präzision und/oder bedarfsgerechter erfolgen.

In einer weiteren bevorzugten Ausführungsform ist das Sprachmodell dazu eingerichtet, seinen Betrieb zu dokumentieren. Das Sprachmodell kann beispielsweise Logs seiner Tätigkeit, der erfolgten Anfragen, die aus der Wissensdatenbank und/oder über die Datenschnittstellen abgerufene Information bzw. Betriebsdaten, seine korrespondierenden Beurteilungen oder Analysen und/oder dergleichen anfertigen. Diese Dokumentation ermöglicht nicht nur den Einsatz des Sprachmodells in einem industriellen Umfeld mit hinreichender Ausfallsicherheit und Nachverfolgbarkeit, sondern kann auch ein Benutzermanagement erleichtern.

In einer weiteren bevorzugten Ausführungsform ist das Sprachmodell dazu eingerichtet, eine Anfrage zu einem vorbestimmten Zeitpunkt einmalig oder zu vorbestimmten Zeitpunkten wiederholt zu bearbeiten. Die Bearbeitung kann so unabhängig davon erfolgen, ob der anfragende Benutzer oder die anfragende Anlagenkomponente zu dem (den) vorbestimmten Zeitpunkt(en) aktiv ist. Beispielsweise kann das Sprachmodell zum Zwecke der Betriebsplanung und Wartung einmal wöchentlich oder in einer anderen Trocknung einen auf der Betriebsanalyse beruhenden Zustandsbericht verfassen. Dadurch ist ein besonders eng gesteuerter Betrieb der Anlage möglich.

In einer weiteren bevorzugten Ausführungsform ist wenigstens ein Agent zur Bearbeitung eines vorbestimmten Aspekts der Betriebsanalyse vorgesehen. Zweckmäßigerweise ist das Sprachmodell dazu eingerichtet, eine Anfrage in wenigstens zwei Teilanfragen zu zerlegen und den wenigstens einen Agenten zu veranlassen, auf Grundlage der in der Wissensdatenbank gespeicherten Anlageninformation und der Betriebsdaten der Anlagenkomponenten den mit der Teilanfrage korrespondierenden vorbestimmten Aspekt der Betriebsanalyse vorzunehmen. Ein Agent im Sinne der vorliegenden Erfindung ist vorzugsweise ein hinsichtlich eines vorbestimmten Aspekts der Betriebsanalyse spezialisiertes maschinell erlerntes generatives Sprachmodell. Bei dem Agenten kann es sich insbesondere um eine Instanz des maschinell erlernten generativen Sprachmodells handeln. Das Sprachmodell kann vorzugsweise einen oder mehrere Agenten triggern, d. h. eine Betriebsanalyse durch den jeweiligen Agenten veranlassen. Die Agenten können für die Durchführung oder Lösung spezifischer Aufgaben, zum Beispiel für Plausibilitätsprüfungen, eingerichtet sein. Das Vorsehen von wenigstens einem Agenten erlaubt eine effiziente Bearbeitung der Anfrage. Gegebenenfalls kann so, durch die Spezialisierung der Agenten, auch eine zuverlässigere Beurteilung des Betriebszustands erfolgen.

In einer weiteren bevorzugten Ausführungsform sind die Agenten dazu eingerichtet, zur Bearbeitung einer ihnen jeweils zugeordneten Teilanfrage die Bearbeitung eines vorbestimmten Aspekts der Betriebsanalyse durch wenigstens einen anderen Agenten zu veranlassen. Ein Agent kann also eine ihm zugeordnete bzw. an ihn gestellte Teilanfrage abermals zerlegen und wenigstens einen Aspekt der Teilanfrage durch einen oder mehrere andere Agenten bearbeiten lassen. Zweckmäßigerweise sind die Agenten dabei auch dazu eingerichtet, Betriebsanalysen mehrerer anderer Agenten zusammenzufassen. Dadurch lässt sich eine dynamische Interaktion zwischen den Agenten erreichen, wodurch auch komplexe Aufgaben oder Fragestellungen effizient und zuverlässig bearbeitet werden können.

Gemäß einem zweiten Aspekt der Erfindung wird bei einem, insbesondere zumindest teilweise computerimplementierten, Verfahren zur Betriebsanalyse einer metallverarbeitenden Anlage, insbesondere mittels eines Systems gemäß dem ersten Aspekt der Erfindung: i) eine Anfrage über eine Eingabeschnittstelle an ein maschinell erlerntes generatives Sprachmodell einer Datenverarbeitungseinrichtung übermittelt; ii) eine Anlageninformation, die eine metallverarbeitende Anlage betrifft, aus einer Wissensdatenbank abgerufen; iii) Betriebsdaten von wenigstens zwei Anlagenkomponenten über jeweils eine Datenschnittstelle abgerufen; iv) ausgehend von der über die Eingabeschnittstelle gestellten Anfrage eine Betriebsanalyse der metallverarbeitenden Anlage auf Grundlage der aus der Wissensdatenbank abgerufenen Anlageninformation und der abgerufenen Betriebsdaten der Anlagenkomponenten mittels eines maschinellen erlernten Sprachmodells vorgenommen; und v) eine auf der Betriebsanalyse beruhende Information über eine Ausgabeschnittstelle ausgegeben.

Das maschinell erlernte generative Sprachmodell ermöglicht einen textbasierten Informationszugriff auf im Wesentlichen alle für eine umfassende Betriebsanalyse einer metallverarbeitenden Anlage relevante Informationen. Insofern kann das Sprachmodell externe Anlagenkomponenten oder Systeme als auch (statische) Anlageninformation aus der Wissensdatenbank in die Betriebsanalyse integrieren. Es lassen sich infolgedessen auch Fragestellungen beantworten oder bearbeiten, die Daten aus mehreren externen Anlagenkomponenten oder Systemen erfordern. Verschiedene oder neue Fragestellungen können dabei, anders als in konventionellen Überwachungssystemen, ohne zeitaufwendige Anpassungen bearbeitet werden. Dadurch erhöht sich die Verfügbarkeit erheblich. Da Anfragen nicht nur von menschlichen Benutzern, sondern auch anlagenintern, d. h. von anderen Anlagenkomponenten oder Systemen, gestellt werden können, lässt sich im Wesentlichen eine kontinuierliche Überwachung der Anlage realisieren, die ein schnelles bzw. zeitnahes Finden von Problemen ermöglicht und bei deren Lösung behilflich sein kann.

Entsprechend lässt sich eine mit dem erfindungsgemäßen System ausgestattete Anlage besonders aufwandsarm und störungsfrei betreiben. Daher weist gemäß einem dritten Aspekt der Erfindung eine metallverarbeitende Anlage ein System gemäß dem ersten Aspekt der Erfindung auf, und gemäß einem vierten Aspekt der Erfindung wird ein System gemäß dem ersten Aspekt der Erfindung zur Betriebsanalyse einer metallverarbeitenden Anlage verwendet.

Gemäß einem fünften Aspekt der Erfindung wird beim Verfahren zum Konfigurieren eines maschinellen erlernten generativen Sprachmodells zum Einsatz in einem System gemäß dem ersten Aspekt der Erfindung oder einem Verfahren gemäß dem zweiten Aspekt der Erfindung dem Sprachmodell über eine Eingabeschnittstelle eine Semantik-basierte Beschreibung der metallverarbeitenden Anlage zur Verfügung gestellt. Zweckmäßigerweise ist in dieser Beschreibung eine Information jeweils einer Datenschnittstelle und den über diese Datenschnittstellen abrufbaren Betriebsdaten von wenigstens zwei Anlagenkomponenten enthalten. Insbesondere kann die Beschreibung anlagenspezifische Daten enthalten, welche eine Information darüber liefern, welche (Daten-)Schnittstellen es (innerhalb der Anlage) gibt, welche (Betriebs-)Daten dort abgerufen werden können und welche Bedeutung diese (Betriebs-)Daten haben. Über die Eingabeschnittstelle kann dem Sprachmodell also insbesondere mitgeteilt werden, welche Information in den Betriebsdaten enthalten ist, wie die Betriebsdaten zu interpretieren sind und wie auf die Betriebsdaten zugegriffen werden kann. Vorzugsweise wird dem Sprachmodell dabei auch mitgeteilt, welche Information in der Wissensdatenbank zu finden ist und wie auf diese Information zugegriffen werden kann. Beispielsweise kann dem Sprachmodell die Daten- oder InformationsInfrastruktur der Anlage mitgeteilt werden, insbesondere welches Kommunikationsprotokoll genutzt werden muss, wie die Datenbank oder die Anlagenkomponenten adressiert werden müssen und/oder dergleichen. Das Sprachmodell kann so bei Bedarf, insbesondere situationsgerecht, auf die benötigten Daten und Informationen zugreifen, um zu einer besonders zuverlässigen und präzisen Beurteilung des Anlagenzustands bzw. einer umfassenden Betriebsanalyse zu gelangen.

### Kurze Beschreibung der Zeichnungen

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit den Zeichnungen näher erläutert wird. Dabei zeigen:
- FIG 1: ein Beispiel einer metallverarbeitenden Anlage mit einem System zur Betriebsanalyse;
- FIG 2: ein Beispiel einer Datenverarbeitungsvorrichtung mit einem maschinell erlerntem generativen Sprachmodell; und
- FIG 3: ein Beispiel eines Verfahrens zur Konfiguration eines maschinell erlernten generativen Sprachmodells.

Soweit zweckdienlich, werden in den Figuren dieselben Bezugszeichen für dieselben oder einander entsprechende Elemente der Erfindung verwendet.

### Beschreibung der Ausführungsformen

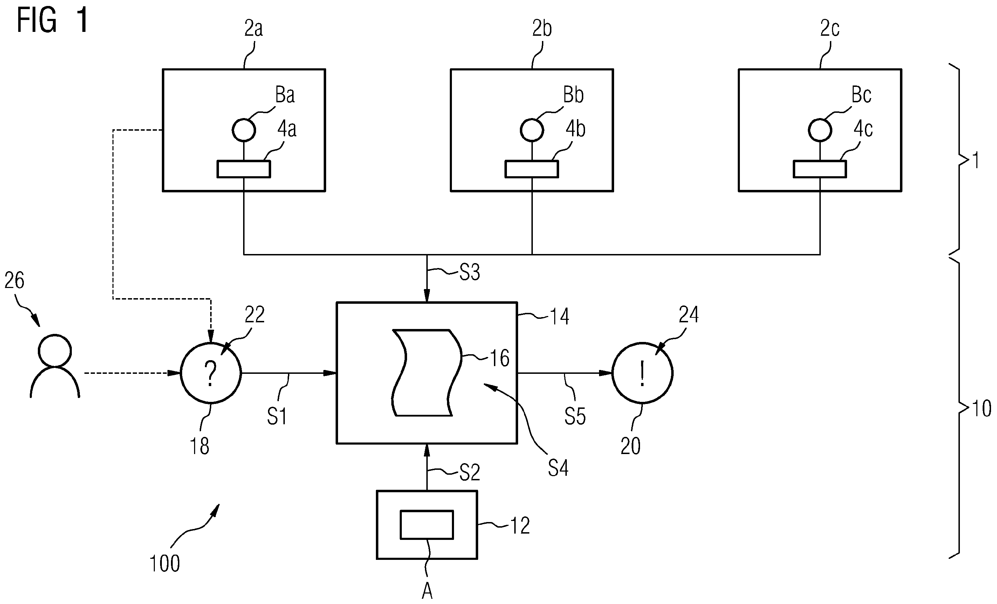

FIG 1 zeigt ein Beispiel einer metallverarbeitenden Anlage 1 mit einem System 10 zur Betriebsanalyse der Anlage 1. Die Anlage 1 weist mehrere Anlagenkomponenten 2a, 2b, 2c auf, die beispielsweise Prozessschritte eines in der Anlage 1 ablaufenden Gesamtprozesses durchführen oder zur Steuerung und/oder Überwachung dieser Prozessschritte eingerichtet sind. Jede der Anlagenkomponenten 2a, 2b, 2c verfügt über eine Datenschnittstelle 4a, 4b, 4c, über die Betriebsdaten Ba, Bb, Bc der jeweiligen Anlagenkomponente 2a, 2b, 2c bereitgestellt oder abgerufen werden können. Das System 10 weist eine Wissensdatenbank 12 mit einer darin gespeicherten Anlageninformation A, eine Datenverarbeitungsvorrichtung 14 mit einem maschinell erlernten generativen Sprachmodell 16, eine Eingabeschnittstelle 18 und eine Ausgabeschnittstelle 20 auf.

Die in der Wissensdatenbank 12 gespeicherten Anlagendaten A betreffen vorzugsweise anlagenspezifisches, statistisches (Hintergrund-)Wissen, während die Betriebsdaten Ba, Bb, Bc dynamisches Wissen, etwa hinsichtlich des aktuellen Betriebszustands, repräsentieren. Die Anlageninformation A kann zum Beispiel eine Information über das Anlagenlayout, einzelne Bauteile oder Baugruppen - etwa Baupläne, Schaltpläne und dergleichen -, Erfahrungsberichte aus dem Betrieb der Anlage 1 und/oder dergleichen enthalten. Beispielsweise können in der Wissensdatenbank 12 als Teil der Anlageninformation A Dokumentationen zur Anlage und/oder dem Anlagenbetrieb oder sonstige Begleittexte gespeichert sein. Die Anlageninformation A kann insbesondere auch Information zu den Anlagenkomponenten 2a, 2b, 2c, zum Beispiel entsprechende Dokumentationen, umfassen. Die Anlageninformation A kann rein beispielhaft eine Dokumentation zur Prozessautomatisierung für ein Walzwerk der Anlage 1 enthalten, in der numerische Daten angegeben sind, wie die Prozessautomatisierung und/oder das Walzwerk zur Herstellung eines bestimmten Produkts eingestellt werden muss. Ebenso rein beispielhaft kann die Anlageninformation A eine Dokumentation zu einem Condition Monitoring-System der Anlage 1, d. h. einer Anlagenüberwachung, enthalten, in der Handlungsempfehlungen bei möglichen Anlagenproblemen beschrieben sind.

Anders als das durch die (allgemeingültige) Anlageninformation A repräsentierte Wissen charakterisieren die Betriebsdaten Ba, Bb, Bc zweckmäßigerweise den (aktuellen) Betriebszustand der jeweiligen Anlagenkomponente 2a, 2b, 2c, den mit dieser Anlagenkomponente 2a, 2b, 2c durchgeführten Prozess und/oder den Zustand, insbesondere die Qualität, des dabei hergestellten Produkts.

Rein beispielhaft sei angenommen, dass die Anlagenkomponente 2a als Prozessautomatisierung eines Walzwerks ausgebildet ist. Die Datenverarbeitungsvorrichtung 14 kann, bei Bedarf, über die Schnittstelle 4a infolgedessen aktuelle numerische Daten zum Beispiel für die im Walzwerk wirkenden Kräfte, die Stärke der Walzenbiegung, die Temperatur der Walzen oder des Walzguts, die Drehmomente der Walzen, die Motorleistung und/oder andere Mess- oder Prozesswerte umfassen. Daneben können über die Datenschnittstelle 4a aber auch von der Prozessautomatisierung erzeugte Fehlermeldungen bereitgestellt bzw. abgerufen werden. Solche Daten können in einem entsprechenden Log, zum Beispiel einer entsprechenden Textdatei, vorliegen oder bereitgestellt werden bzw. von der Datenverarbeitungsvorrichtung 14 abgerufen werden. Die Betriebsdaten Ba in ihrer Gesamtheit können infolgedessen einen Betriebszustand des Walzwerks charakterisieren.

In einem anderen Beispiel könnte die Anlagenkomponente 2b als Condition Monitoring-System zur Überwachung der Anlage 1 ausgebildet sein. Die Betriebsdaten Bb können infolgedessen numerische Daten zum Beispiel zu Motoren der Anlage 1, Antriebssträngen, Energieversorgung, Synchronisation verschiedener Aggregate und/oder dergleichen enthalten. Die Betriebsdaten Bb können daneben aber auch textbasierte Zustandsmeldungen, zum Beispiel ob sich die Anlage 1 gegenwärtig in einem guten, durchschnittlichen oder schlechten Zustand befindet, enthalten.

Schließlich sei noch angenommen, die Anlagenkomponente 2c sei - rein beispielhaft - als Qualitätsmonitoring-System zur Überwachung der Prozess- oder Produktqualität ausgebildet. Die Betriebsdaten Bc können infolgedessen produktbezogene numerische Daten wie zum Beispiel Oberflächenbeschaffenheit, Geometrie, Defektdichte und/oder dergleichen enthalten.

Das maschinell erlernte generative Sprachmodell 16 ist vorzugsweise als Large Language Model (LLM) oder Small Language Modell (SLM) ausgebildet. Das Sprachmodell 16 weist vorzugsweise eine Transformer-Architektur auf, sodass es über die Eingabeschnittstelle 18 gestellte Anfragen 22 in eine über die Ausgabeschnittstelle 20 auszugebende Information 24 transformieren kann. Dabei ist das Sprachmodell 16 zweckmäßigerweise in der Lage, die Anfrage 22 semantisch zu verarbeiten, d. h. den Sinngehalt der Anfrage 22 zu "verstehen". Bei der Transformation, d. h. zur Bearbeitung der Anfrage 22, greift das Sprachmodell 16 zweckmäßigerweise auf die (relevante) Anlageninformation A sowie die (relevanten) Betriebsdaten Ba, Bb, Bc von wenigstens zwei Anlagenkomponenten 2a, 2b, 2c zu. Das Sprachmodell 16 kann, aufgrund seines "Verständnisses" der Anfrage 22 und dem gesamten, durch die Anlageninformation A repräsentierten Wissen sowie dem durch die Betriebsdaten Ba, Bb, Bc repräsentierten dynamischen Wissen ("Momentanwissen") als Fachexperte fungieren, d. h. eine menschliche Fachperson ersetzen, und die Anfrage 22 qualifiziert beantworten. Effektiv führt das Sprachmodell 16 dabei eine Betriebsanalyse der Anlage 1 durch; es berücksichtigt nämlich den aktuellen, durch die Betriebsdaten Ba, Bb, Bc charakterisierten Betriebszustand der Anlage 1, insbesondere der Anlagenkomponenten 2a, 2b, 2c, sowie die durch die Anlageninformation A gegebenen Umstände oder den Hintergrund, unter denen bzw. vor dem dieser Betriebszustand eingetreten ist. Die Information 24 beruht infolgedessen auf dieser vom Sprachmodell 16 vorgenommenen Betriebsanalyse.

Das Sprachmodell 16 ist dabei zweckmäßigerweise mit einer Vielzahl von Texten, Bildern, Videos und/oder dergleichen aller möglichen Themengebiete trainiert, wie durch den Begriff "Sprachmodell" bereits impliziert ist. Das Sprachmodell 16 muss nicht speziell für den Einsatz in einer metallverarbeitenden Anlage 1 trainiert sein; es kann vielmehr eine "Allgemeinbildung" aufweisen. Eine Anfrage 22 wird deshalb nicht mittels dem Sprachmodell 16 inhärentem Fachwissen bearbeitet oder beantwortet; stattdessen kann das Sprachmodell 16 durch den Zugriff der Datenverarbeitungsvorrichtung 14 auf die relevante Anlageninformation A und die relevanten Betriebsdaten Ba, Bb, Bc zugreifen und sich somit situationsgerecht "einlesen" bzw. die notwendigen Schlüsse ziehen, um die Anfrage 22 bearbeiten oder beantworten zu können. Das Sprachmodell 16 arbeitet infolgedessen vergleichbar mit einer menschlichen Fachperson, der die Anfrage 22 gestellt wird und die sich ebenfalls erst eine Hintergrundinformation (in Form der Anlageninformation A) bezüglich der Anlage 1 und den aktuellen Betriebszustand (repräsentiert durch die Betriebsdaten Ba, Bb, Bc) ansehen muss, um die Anfrage 22 bedarfsgerecht beantworten zu können.

Das Ausstatten der Datenverarbeitungsvorrichtung 14 mit dem maschinell erlernten generativen Sprachmodell 16 hat - u. a. neben der Einsparung menschlicher Ressourcen und der dauerhaften Verfügbarkeit - auch den Vorteil, dass die Anlageninformation A, die Betriebsdaten Ba, Bb, Bc sowie die Anfrage 22 selbst nicht zwingend in einer vorbestimmten Form vorliegen oder vorverarbeitet werden müssen. Insbesondere kann das Sprachmodell 16 auch Textinformation verarbeiten und bei der Betriebsanalyse berücksichtigen. Es ist daher denkbar, die Anfrageschnittstelle 18 als Mensch-Maschine-Schnittstelle auszubilden, sodass ein menschlicher Benutzer 26 die Anfrage 22 beispielsweise prompten kann. Andererseits ist es aber auch denkbar, dass die Eingabeschnittstelle 18 dazu eingerichtet ist, eine Eingabe eines menschlichen Benutzers 26 in einen solchen Prompt, d. h. in die eigentliche Anfrage 22, umzuwandeln. Tätigt der menschliche Benutzer 26 beispielsweise eine Spracheingabe, die von einem Mikrofon der Eingabeschnittstelle 18 aufgenommen wird, so kann die Eingabeschnittstelle 18 dazu eingerichtet sein, diese Spracheingabe in einen Prompt umzuwandeln, d. h. zu verschriftlichen, und als Anfrage 22 an das Sprachmodell 16 zu übermitteln.

Die Eingabeschnittstelle 18 muss aber nicht nur auf die Benutzung durch menschliche Benutzer 26 ausgelegt sein. Es ist vielmehr auch denkbar, dass Anlagenkomponenten 2a, 2b, 2c Anfragen 22 stellen können. In FIG 1 ist daher rein beispielhaft eine Datenverbindung zwischen der Anlagenkomponente 2a und der Eingabeschnittstelle 18 angedeutet. Dadurch kann sich die Anlagenkomponente 2a, zum Beispiel die Prozessautomatisierung für ein Walzwerk, in bestimmten, zweckmäßigerweise vorgegebenen, Betriebssituationen eine nur in der Gesamtschau, d. h. unter Berücksichtigung der Anlageninformation A und der Betriebsdaten Bb, Bc anderer Anlagenkomponenten 2b, 2c, ermittelbare Information 24 über die Ausgabeschnittstelle 20 ausgeben lassen. In diesem Fall ist die Ausgabeschnittstelle 20 zweckmäßigerweise ebenfalls als Datenschnittstelle ausgebildet, sodass die Anlagenkomponenten 2a, 2b, 2c bei Bedarf auf die Information 24 zugreifen können. Alternativ oder zusätzlich kann aber auch die Ausgabeschnittstelle 20, wie die Eingabeschnittstelle 18, als Mensch-Maschine-Schnittstelle ausgebildet sein, zum Beispiel, um bei einer durch einen menschlichen Benutzer 26 erfolgten Anfrage 22 die Information 24 an den anfragenden Benutzer 26 ausgeben zu können.

In FIG 1 sind auch die Verfahrensschritte S1, S2, S3, S4, S5 eines Verfahrens 100 zur Betriebsanalyse einer metallverarbeitenden Anlage 1, insbesondere mittels des Systems 10, eingezeichnet. Wie bereits ausführlich beschrieben wird hierbei in einem Verfahrensschritt S1 die Anfrage 22 über die Eingabeschnittstelle 18 an das maschinell erlernte generative Sprachmodell 16 der Datenverarbeitungsvorrichtung 14 übermittelt. In einem weiteren Verfahrensschritt S2 wird die die Anlage 1 betreffende Anlageninformation A aus der Wissensdatenbank 12 abgerufen und in einem weiteren Verfahrensschritt S3 die Betriebsdaten Ba, Bb, Bc von wenigstens zwei Anlagenkomponenten 2a, 2b, 2c über jeweils eine Datenschnittstelle 4a, 4b, 4c abgerufen. Ausgehend von der über die Eingabeschnittstelle 18 gestellten Anfrage 22 nimmt das Sprachmodell 16 dann eine Betriebsanalyse der Anlage 1 auf Grundlage der abgerufenen Anlageninformation A und der Betriebsdaten Ba, Bb, Bc in einem weiteren Verfahrensschritt S4 vor. Die auf dieser Betriebsanalyse beruhende Information 24 wird dann über die Ausgabeschnittstelle 20 in einem weiteren Verfahrensschritt S5 ausgegeben.

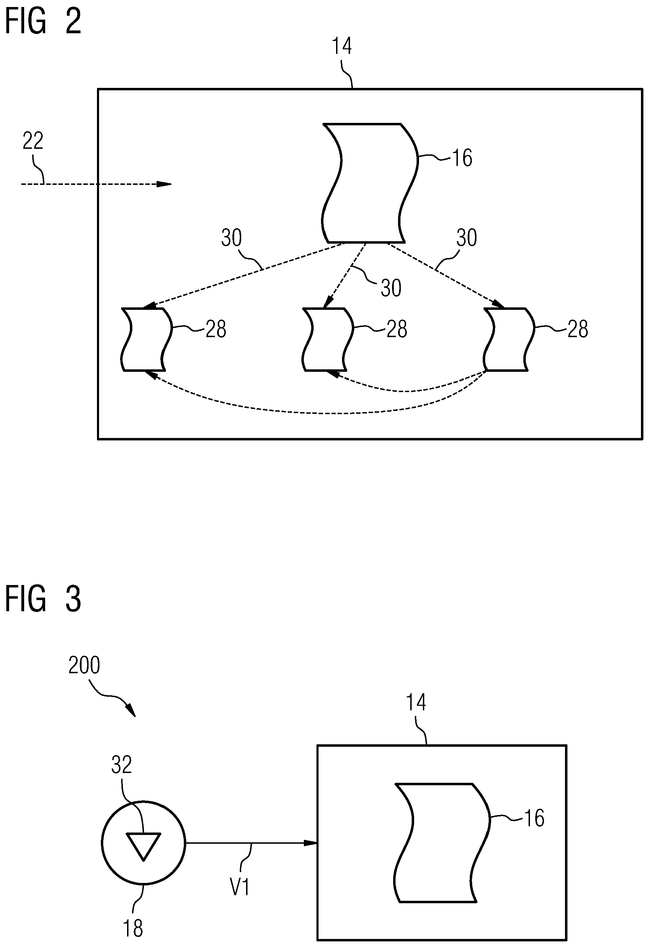

FIG 2 zeigt ein Beispiel einer Datenverarbeitungsvorrichtung 14 mit einem maschinell erlernten generativen Sprachmodell 16. Die Datenverarbeitungsvorrichtung 14 weist hierbei eine Vielzahl von auch als Helfer bezeichneten Agenten 28 auf. Auf einer obersten Hierarchieebene steht das Sprachmodell 16, welches zweckmäßigerweise dazu eingerichtet ist, eingehende Anfragen 22 in wenigstens zwei Teilanfragen 30 zu zerlegen und einen oder mehrere Agenten 28 mit der Bearbeitung oder Beantwortung wenigstens einer dieser Teilanfragen 30 zu betrauen. Gegebenenfalls können diese, mit der Bearbeitung der Teilaufgabe(n) 30 betrauten Agenten 28 wiederum einen oder mehrere anderen Agenten 28 mit der Bearbeitung oder Beantwortung eines Teils der Teilanfrage 30 betrauen. Dieser Fall ist in FIG 2 für einen der Agenten 28 beispielhaft eingezeichnet.

Das Vorsehen mehrerer Agenten 28 ist besonders vorteilhaft, wenn die einzelnen Agenten 28 zur Lösung spezifischer Problemstellungen ausgebildet sind, also zum Beispiel jeweils einen vorbestimmten Aspekt einer Betriebsanalyse einer metallverarbeitenden Anlage ausführen können. Dies kann sowohl die Bearbeitung der Anfrage 22 beschleunigen als auch zuverlässige und präzisere Betriebsanalyse ermöglichen.

FIG 3 zeigt ein Beispiel eines Verfahrens 200 zum Konfigurieren eines maschinell erlernten generativen Sprachmodells 16 zum Einsatz in einem System oder Verfahren zur Betriebsanalyse einer metallverarbeitenden Anlage (vgl. FIG 1). Das Sprachmodell 16 wird dabei zweckmäßigerweise von einer Datenverarbeitungsvorrichtung 14 eines solchen Systems betrieben. Zur Konfiguration des Sprachmodells 16 wird dem Sprachmodell 16 über eine Eingabeschnittstelle 18 in einem Verfahrensschritt V1 eine Semantik-basierte Beschreibung 32 der betroffenen metallverarbeitenden Anlage zur Verfügung gestellt. In dieser Beschreibung 32 ist zweckmäßigerweise eine Information zu Datenschnittstellen von wenigstens zwei Anlagenkomponenten der Anlage und den über diese Datenschnittstellen abrufbaren Betriebsdaten dieser Anlagenkomponenten enthalten. Dem Sprachmodell 16 kann somit mitgeteilt werden, welche Schnittstellen es innerhalb der Anlage gibt, welche Daten dort abgerufen werden können welche Bedeutung diese Daten haben, d. h. wie diese Daten zu interpretieren sind. Dem Sprachmodell 16 kann mit anderen Worten die Informations- oder Datenstruktur der Anlage eingeprägt werden, sodass sich das Sprachmodell 16 bei Bedarf, insbesondere bei Eingehen einer Anfrage, die entsprechende Information oder die entsprechenden Daten zur Transformation der Anfrage in eine auszugebende Information, insbesondere zur Durchführung einer Betriebsanalyse der Anlage, beschaffen kann.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Anlage
- 2a, 2b, 2c: Anlagenkomponente
- 4a, 4b, 4c: Datenschnittstelle
- 10: System
- 12: Wissensdatenbank
- 14: Datenverarbeitungsvorrichtung
- 16: Sprachmodell
- 18: Eingabeschnittstelle
- 20: Ausgabeschnittstelle
- 22: Anfrage
- 24: Information
- 26: Benutzer
- 28: Agent
- 30: Teilanfrage
- 32: Beschreibung

- Ba, Bb, Bc: Betriebsdaten
- A: Anlageninformation

- 100: Verfahren
- S1: Anfrage übermitteln
- S2: Anlageninformation abrufen
- S3: Betriebsdaten abrufen
- S4: Betriebsanalyse vornehmen
- S5: Information ausgeben

- 200: Verfahren
- V1: Beschreibung zur Verfügung stellen

## Patentansprüche

1. System (10) zur Betriebsanalyse einer metallverarbeitenden Anlage (1), aufweisend:
- eine Wissensdatenbank (12), in der eine Anlageninformation (A), welche eine metallverarbeitende Anlage (1) betrifft, gespeichert ist;
- eine Datenverarbeitungsvorrichtung (14) mit einem maschinell erlernten generativen Sprachmodell (16), welche auf die in der Wissensdatenbank (12) gespeicherte Anlageninformation (A) und über jeweils eine Datenschnittstelle (4a, 4b, 4c) auf Betriebsdaten (Ba, Bb, Bc) von wenigstens zwei Anlagenkomponenten (2a, 2b, 2c) zugreifen kann;
- wenigstens eine Eingabeschnittstelle (18) zum Übermitteln einer Anfrage (22) an das Sprachmodell (16); und
- wenigstens eine Ausgabeschnittstelle (20) zum Ausgeben einer Information (24),
wobei das Sprachmodell (16) dazu eingerichtet ist, ausgehend von einer über die Eingabeschnittstelle (18) gestellten Anfrage (22) auf Grundlage der in der Wissensdatenbank (12) gespeicherten Anlageninformation (A) und der Betriebsdaten (Ba, Bb, Bc) der wenigstens zwei Anlagenkomponenten (2a, 2b, 2c) eine Betriebsanalyse der metallverarbeitenden Anlage (1) vorzunehmen und eine auf dieser Betriebsanalyse beruhende Information (24) über die Ausgabeschnittstelle (20) auszugeben.

2. System (10) nach Anspruch 1, wobei das Sprachmodell (16) dazu eingerichtet ist, die Betriebsanalyse der metallverarbeitenden Anlage (1) ausgehend von einer Kombination der in der Wissensdatenbank (12) gespeicherten Anlageninformation (A) mit den Betriebsdaten (Ba, Bb, Bc) vorzunehmen.

3. System (10) nach einem der vorangehenden Ansprüche, wobei die Eingabeschnittstelle (18) eine Semantik-basierte Anfrage (22) und die Ausgabeschnittstelle (20) eine Semantik-basierte Ausgabe ermöglicht.

4. System (10) nach einem der vorangehenden Ansprüche, wobei das Sprachmodell (16) durch die Verarbeitung einer Semantik-basierten Beschreibung (32) der metallverarbeitenden Anlage (1) zum Vornehmen einer Betriebsanalyse der metallverarbeitenden Anlage (1) eingerichtet ist.

5. System (10) nach einem der vorangehenden Ansprüche, wobei das Sprachmodell (16) dazu eingerichtet ist, in Reaktion auf eine Anfrage (22) anhand von der in der Wissensdatenbank (12) gespeicherten Anlageninformation (A) und/oder den Betriebsdaten (Ba, Bb, Bc) der Anlagenkomponenten (2a, 2b, 2c) eine Rückfrage über die Ausgabeschnittstelle (20) auszugeben mit der Aufforderung, die Anfrage (22) zu präzisieren und/oder eine Zwischenvalidierung vorzulegen.

6. System (10) nach einem der vorangehenden Ansprüche, wobei das Sprachmodell (16) dazu eingerichtet ist, seinen Betrieb zu dokumentieren.

7. System (10) nach einem der vorangehenden Ansprüche, wobei das Sprachmodell (16) dazu eingerichtet ist, eine Anfrage (22) zu einem vorbestimmten Zeitpunkt einmalig oder zu vorbestimmten Zeitpunkten wiederholt zu bearbeiten.

8. System (10) nach einem der vorangehenden Ansprüche, mit wenigstens einem Agenten (28) zur Bearbeitung eines vorbestimmten Aspekts der Betriebsanalyse, wobei das Sprachmodell (16) dazu eingerichtet ist, eine Anfrage (22) in wenigstens zwei Teilanfragen (30) zu zerlegen und den wenigstens einen Agenten (28) zu veranlassen, auf Grundlage der in der Wissensdatenbank (12) gespeicherten Anlageninformation (A) und der Betriebsdaten (Ba, Bb, Bc) der Anlagenkomponenten (2a, 2b, 2c) den mit der Teilanfrage (30) korrespondierenden vorbestimmten Aspekt der Betriebsanalyse vorzunehmen.

9. System (10) nach Anspruch 8, wobei die Agenten (28) dazu eingerichtet sind, zur Bearbeitung einer ihnen jeweils zugeordneten Teilanfrage (30) die Bearbeitung eines vorbestimmten Aspekts der Betriebsanalyse durch wenigstens einen anderen Agenten (28) zu veranlassen.

10. Verfahren (100) zur Betriebsanalyse einer metallverarbeitenden Anlage (1), insbesondere mittels eines Systems (10) gemäß einem der vorangehenden Ansprüche, wobei
- eine Anfrage (22) über eine Eingabeschnittstelle (18) an ein maschinell erlerntes generatives Sprachmodell (16) einer Datenverarbeitungsvorrichtung (14) übermittelt wird (S1),
- eine Anlageninformation (A), welche eine metallverarbeitende Anlage (1) betrifft, aus einer Wissensdatenbank (12) abgerufen wird (S2),
- Betriebsdaten (Ba, Bb, Bc) von wenigstens zwei Anlagenkomponenten (2a, 2b, 2c) über jeweils eine Datenschnittstelle (4a, 4b, 4c) abgerufen werden (S3),
- ausgehend von der über die Eingabeschnittstelle (18) gestellten Anfrage (22) eine Betriebsanalyse der metallverarbeitenden Anlage (1) auf Grundlage der aus der Wissensdatenbank (12) abgerufenen Anlageninformation (A) und der abgerufenen Betriebsdaten (Ba, Bb, Bc) der Anlagenkomponenten (2a, 2b, 2c) mittels des maschinell erlernten generativen Sprachmodells (16) vorgenommen wird (S4) und
- eine auf der Betriebsanalyse beruhende Information (24) über eine Ausgabeschnittstelle (20) ausgegeben wird (S5).

11. Metallverarbeitende Anlage (1) mit einem System (10) gemäß einem der Ansprüche 1 bis 9.

12. Verwendung eines Systems (10) gemäß einem der Ansprüche 1 bis 9 zur Betriebsanalyse einer metallverarbeitenden Anlage (1).

13. Verfahren (200) zum Konfigurieren eines maschinell erlernten generativen Sprachmodells (16) zum Einsatz in einem System (10) gemäß einem der Ansprüche 1 bis 9 oder einem Verfahren (100) gemäß Anspruch 10, wobei dem Sprachmodell (16) über eine Eingabeschnittstelle (18) eine Semantik-basierte Beschreibung (32) der metallverarbeitenden Anlage (1) zur Verfügung gestellt wird (V1), in der eine Information zu Datenschnittstellen (4a, 4b, 4c) von wenigstens zwei Anlagenkomponenten (2a, 2b, 2c) und den über die Datenschnittstellen (4a, 4b, 4c) abrufbaren Betriebsdaten (Ba, Bb, Bc) dieser Anlagenkomponenten (2a, 2b, 2c) enthalten ist.
